(19) Europäisches Patentamt

European Patent Office

Office européen des brevets

(11) **EP 4 685 674 A1**

(12) **EUROPEAN PATENT APPLICATION**

(43) Date of publication:
28.01.2026 Bulletin 2026/05

(21) Application number: 24190955.5

(22) Date of filing: 25.07.2024

(51) International Patent Classification (IPC):
**G06F 18/25** (2023.01)    **G06V 10/764** (2022.01)
**G06V 10/774** (2022.01)    **G06V 10/82** (2022.01)
**G06V 20/56** (2022.01)

(52) Cooperative Patent Classification (CPC):
**G06V 20/56; G06F 18/256; G06V 10/764;
G06V 10/774; G06V 10/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bayerische Motoren Werke
Aktiengesellschaft
80809 München (DE)**

(72) Inventor: **Schmidt, Sebastian
81925 München (DE)**

(54) **TWO-STAGE ACTIVE LEARNING FOR OBJECT CLASSIFICATION IN AUTOMOTIVE VISUAL PERCEPTION TASKS**

(57)    The present disclosure relates to active learning to improve object classification by an object classifier, the object classification being used for one or more visual perception tasks enabling one or more driving automation system features. To this end, automotive sensor data is selected for annotation by an oracle based on a first selection of sets of automotive sensor data by one or more vehicles based on vehicle instances of the object classifier followed by a second selection by a data center based on repeating object classification on the first selection of automotive sensor data sets using a data center instance of the object classifier. The second selection of automotive sensor data is then annotated by the oracle and used to train the object classifier. Afterwards, both the vehicle instances and the data center instance of the object classifier are updated with the trained object classifier.

Fig. 3B

## Description

TECHNICAL FIELD

The invention generally relates to active learning and more precisely to active learning in the context of automotive perception tasks performed by vehicles configured to provide at least partial driving automation.

BACKGROUND

To enable at least partial driving automation, a vehicle needs to accurately perform automotive perception tasks, such as object classification, object detection or semantic segmentation. These perception tasks are usually performed by machine learning algorithms, which need to be trained on large datasets and may be further improved even once the vehicle is deployed in traffic. One way of ensuring accurate performance of automotive perception tasks by the machine learning algorithms is to train the machine learning algorithms with large, labeled datasets, i.e. datasets which indicate the expected outcome of the respective automotive perception task. However, since such labeling may be performed manually, large, labeled datasets to train machine learning algorithms for at least partial driving automation may be costly to generate. To overcome this issue, active learning may be used, i.e. a given machine learning algorithm may be inferenced on unlabeled data and may request that a subset of the unlabeled data be labeled based on active learning criteria. However, the active learning criteria generally need to be determined in a way which improves a given machine learning algorithm and in the context of at least partial driving automation need to enable achieving the level of accuracy of a machine learning algorithm required for of at least partial driving automation.

It is therefore an objective of the present disclosure to provide active learning criteria which enable the training and improvement of a machine learning algorithm configured to perform an automotive perception task in a manner ensuring the accuracy required for at least partial driving automation.

SUMMARY OF THE INVENTION

To achieve this objective, the present disclosure provides a method configured to enable active learning for object classification configured to perform object classification for one or more visual perception tasks in one or more vehicles. Each vehicle is configured to perform at least one driving automation system feature based on the one or more visual perception tasks. The method is performed by a data center processing unit and comprises obtaining one or more sets of automotive sensor data from the one or more vehicles, which have been selected by the corresponding vehicle from a stream of automotive sensor data based on a vehicle data selection criterion. The vehicle data selection criterion is indicative of one or more parameters of object classification performed by a corresponding vehicle instance of the object classifier based on a corresponding set of the automotive sensor data. The method further comprises performing object classification based on the one or more sets of automotive sensor data using a data center instance of the object classifier. The method further comprises determining an annotation plurality, which comprises one or more of the one or more sets of automotive sensor data selected based on a data center selection criterion. The data center selection criterion is indicative of one or more parameters of the object classification performed by the data center instance of the object classifier based on a corresponding set of the automotive sensor data. The method further comprises providing the annotation plurality to an oracle. The method further comprises receiving an annotated plurality from the oracle, which corresponds to the annotation plurality annotated by the oracle. The method further comprises training the object classifier with the annotated plurality. The method further comprises providing the trained object classifier to the one or more vehicles for updating the corresponding vehicle instances of the object classifier.

To achieve this objective, the present disclosure further provides a method configured to enable active learning for an object classifier configured to perform object classification for one or more visual perception tasks in one or more vehicles. Each vehicle is configured to perform at least one driving automation system feature based on the one or more visual perception tasks. The method is performed by one of the one or more vehicles and comprises performing object classification based on a stream of automotive sensor data using a vehicle instance of the object classifier. The method further comprises selecting one or more sets of automotive sensor data from the stream of automotive sensor data based on a vehicle data selection criterion. The vehicle data selection criterion is indicative of one or more parameters of the object classification performed by the vehicle instance of the object classifier based on a corresponding set of the automotive sensor data. The method further comprises providing the selected one or more sets of automotive sensor data to a data center processing unit. The method further comprises obtaining a trained object classifier for updating the vehicle instance of the object classifier, which has been trained with an annotated plurality, which corresponds to an annotation plurality annotated by an oracle. The annotation plurality comprises one or more of the one or more sets of automotive sensor data selected from the one or more sets of automotive sensor data provided to the data center processing unit by at least the vehicle based on a data center selection criterion. The data center selection criterion is indicative of one or more parameters of object classification performed by a data center instance of the object classifier based on a corresponding set of the automotive sensor data.

The present disclosure further provides a corresponding data center processing unit, a corresponding automotive control unit and a vehicle comprising the automotive control unit.

BRIEF DESCRIPTION OF THE DRAWINGS

Examples of the present disclosure will be described with reference to the following appended drawings, in which like reference signs refer to like elements.

Fig. 1 shows a flowchart of a method configured to enable active learning for an object classifier configured to perform object classification for one or more visual perception tasks in one or more vehicles with the method being performed by a vehicle according to examples of the present disclosure.

Fig. 2 shows a flowchart of a method configured to enable active learning for an object classifier configured to perform object classification for one or more visual perception tasks in one or more vehicles with the method being performed by a data center processing unit according to examples of the present disclosure.

Figs. 3A and 3B illustrate a two-stage active learning approach in accordance with the method of Figs. 1 and 2 according to examples of the present disclosure.

Fig. 4 illustrates a vehicle according to examples of the present disclosure.

Fig. 5 illustrates an automotive control unit according to examples of the present disclosure.

Fig. 6 illustrates a data center processing unit according to examples of the present disclosure.

It should be understood that the above-identified drawings are in no way meant to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

DETAILED DESCRIPTION

The present disclosure provides a two-stage approach to active learning for an object classifier configured to perform object classification for one or more visual perception tasks in one or more vehicles. The object classifier is configured to run as separate instances on one or more vehicles as well as on a data center. The two stages refer to two stages of selection of automotive sensor data sets for annotation by an oracle, with the first selection stage being performed by one or more vehicles respectively executing a vehicle instance of the object classifier and the second selection stage being performed by the data center executing a data center instance of the object classifier.

During the first stage, one or more vehicles respectively perform object classification on a stream of automotive sensor data using their respective vehicle instances of the object classifier. Based on one or more parameters of the respective vehicle instances during the object classification compared with a vehicle data selection criterion, the one or more vehicles select automotive sensor data sets from the stream of automotive sensor data and provide the accordingly selected automotive sensor data sets to the data center.

During the second stage, the data center performs object classification on the automotive sensor data sets provided by the one or more vehicles using the data center instance of the object classifier. Based on one or more parameters of the data center instance during the object classification compared with a data center selection criterion, the data center selects automotive sensor data sets from the automotive sensor data sets provided by the one or more vehicles to determine an annotation plurality and provides the annotation plurality to an oracle for annotation. The oracle returns an annotated plurality, i.e. the automotive sensor data sets selected by the data center annotated by the oracle. The data center trains the object classifier using the annotated plurality, updates the data center instance with the trained object classifier and provides the trained object classifier to the one or more vehicles for them to likewise update their respective vehicle instances of the object classifier.

In summary, the present disclosure selects automotive sensor data sets for annotation by the oracle based on a first selection by one or more vehicles based on vehicle instances of the object classifier followed by a second selection by a data center based on repeating object classification on the first selection of automotive sensor data sets using the data center instance of the object classifier. The second selection of automotive sensor data is then annotated by the oracle and used to train the object classifier. Afterwards, both the vehicle instances and the data center instance of the object classifier are updated with the trained object classifier.

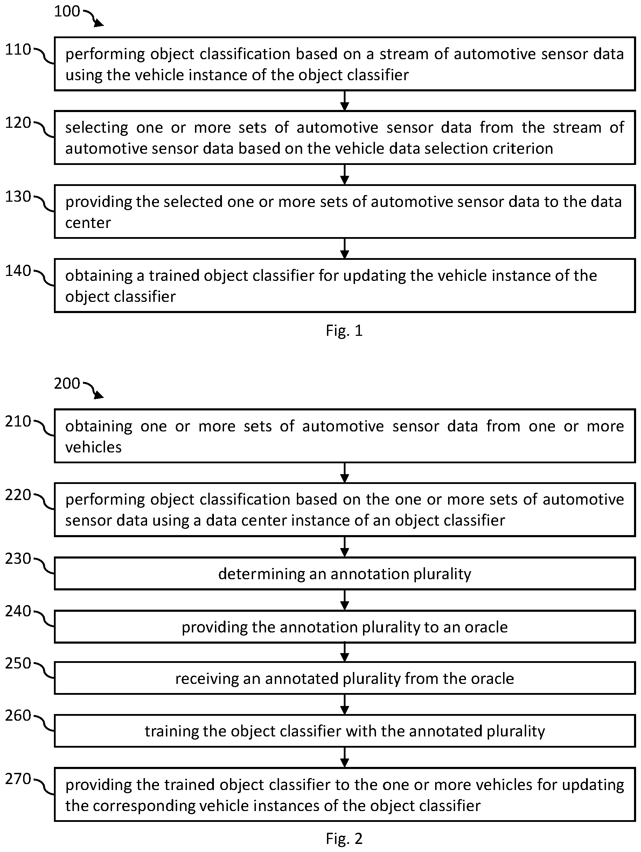

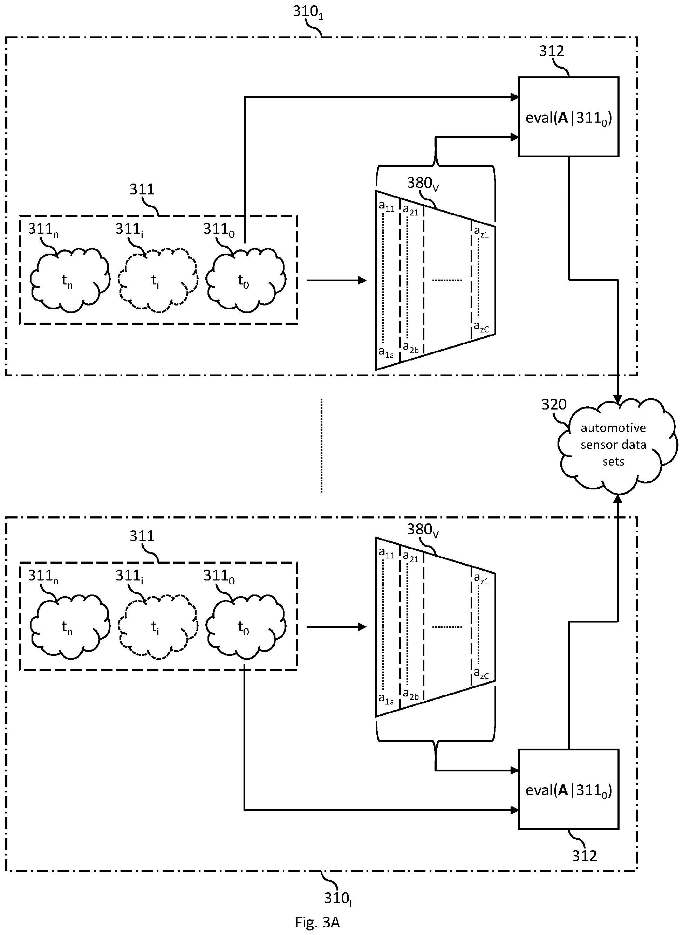

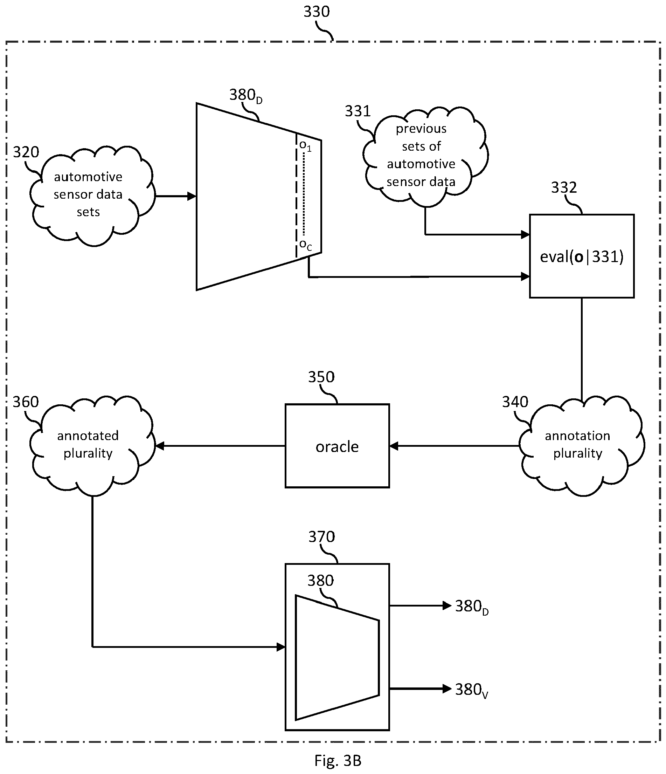

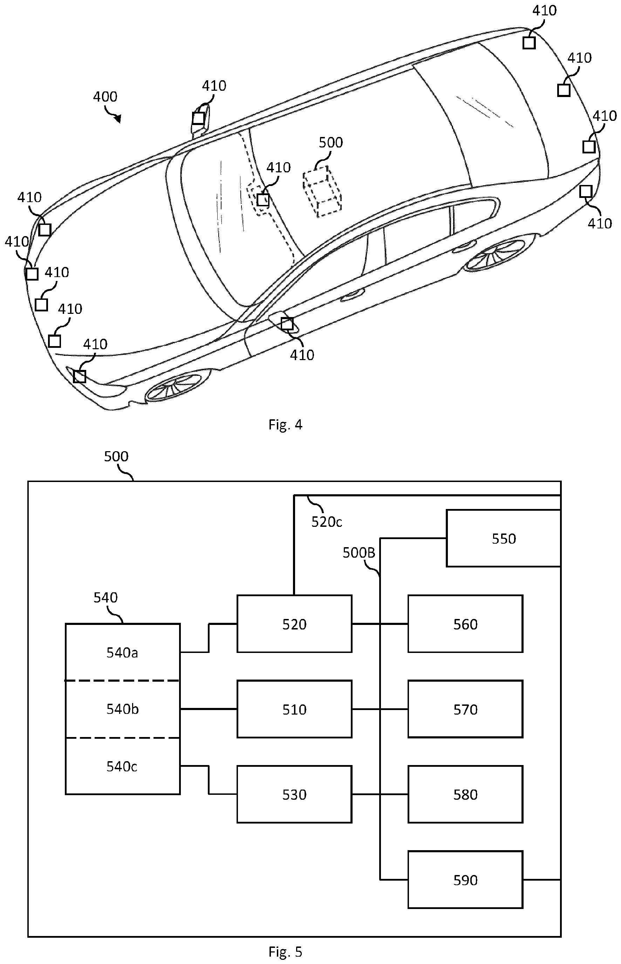

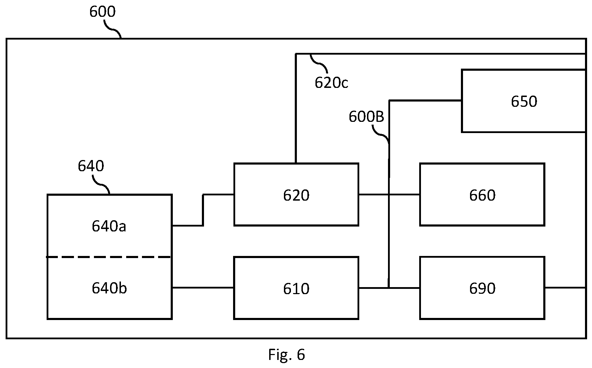

This general concept will be explained with reference to the appended drawings, with Fig. 1 providing a flowchart of a method 100 configured to enable active learning for object classification performed by a vehicle and Fig. 2 providing a flowchart of a method 200 configured to enable active learning for object classification performed by a data center processing unit. Fig. 3 illustrates a two-stage active learning approach in accordance with the methods of Figs. 1 and 2. In addition, Fig. 4 illustrates a vehicle according to the present disclosure, Fig. 5 illustrates an automotive controller configured to perform method 200 and Fig. 6 illustrates a data center processing unit configured to perform method 100.

It will be understood that dashed boxes in any of the flow charts in the appended drawings illustrate optional method steps.

Method 100 of Fig. 1 and method 200 of Fig. 2 will be described in the following concurrently with Figs. 2A and 2B. Given the interrelationship between method 100 and method 200, it will be understood that the following definitions of expressions present in both method 100 and method 200 accordingly apply to both methods.

Both method 100 and method 200 are configured to enable active learning for an object classifier configured to perform object classification for one or more visual perception tasks in one or more vehicles, such as vehicle 400 of Fig. 4, which is configured to perform at least one driving automation system feature based on the one or more visual perception tasks.

Vehicle 400 in the context of the present disclosure refers to any kind of motor vehicle configured to transport people and/or cargo. The motor of vehicle 300 may be any kind of motor, such as an electric motor or an internal combustion engine. Vehicle 400 may e.g. be a passenger vehicle. It will however be understood that vehicle 400 may also be a bus, a truck or any other kind of vehicle including one or more automotive sensors 410 and an automotive control unit 500 enabling vehicle 400 to provide at least one driving automation system feature.

In the context of the present disclosure, driving automation system feature is to be understood in the sense of standard J3016 of SAE International as design-specific functionality of a driving automation system at a given level of driving automation, i.e. any one of levels 1 to 5 of driving automation as defined in the taxonomy of driving automation of standard J3016. For example, the driving automation system feature may be a level 1 lane centering functionality or a level 3 traffic jam assistant on controlled-access highways, i.e. a functionality controlling the longitudinal and lateral motion of vehicle 400 up to a predefined speed on controlled-access highways.

Accordingly, automotive control unit 400 and one or more sensors 410 are configured to enable at least one driving automation system feature. In this context, methods 100 and 200 enable improving the accurate performance of object classification in visual perception tasks by automotive control unit 500 in order to increase safe control of the longitudinal motion and/or the lateral motion of vehicle 400.

The one or more automotive sensors 410 may be configured to capture automotive sensor data indicative of a driving environment of vehicle 400, which may provide the environmental awareness enabling the at least one driving automation system feature. For example, the one or more automotive sensors 410 may provide vehicle 400 with information on the position and size of other vehicles or with information regarding road surface markings, which are extracted from the automotive sensor data based on the object classification performed by the object classifier. To this end, the one or more automotive sensors 410 may be radar sensors, which may be configured to emit radio waves in order to determine a distance, an angle and a velocity of objects around the vehicle based on the reflected radio waves. The one or more sensors 410 may be light detection and ranging (LIDAR) sensors, which are configured to emit laser beams in order to determine a distance, an angle and a velocity of objects around vehicle 400 based on the reflected laser beams. The one or more sensors 410 may be cameras, which are configured to capture images of the environment of the vehicle. The one or more sensors 410 may be thermographic cameras, which are configured to capture images of the environment of vehicle 400 based on infrared radiation. It will be understood that LIDAR sensors, radar sensors or cameras are merely provided as examples of sensor types of the one or more sensors 410. For example, the one or more sensors 410 may also be ultrasonic sensors. More generally, the one or more automotive sensors 410 may be any type of sensor capable of capturing automotive sensor data indicative of the environment of vehicle 300. It will further be understood that the one or more automotive sensors 410 may include multiple sensors of various types of sensors. Further, the one or more automotive sensors 410 of the same type may exhibit different properties, e.g. by being configured to capture sensor data at different ranges, such as a close range, a middle range and a far range. For example, vehicle 400 may include three close range radar sensors each at a front and a back of vehicle 400, a middle range to far range radar sensor at the back of vehicle 400, a LIDAR sensor at the front of vehicle 400, a rear-facing camera at the back of vehicle 400, a front-facing camera at the front of the vehicle, a front-facing camera at the rear-view mirror and a rear-facing close range to middle range radar sensor in each door-mounted outer rear view mirror. It will be understood that vehicle 400 may include more or fewer automotive sensors than shown in Fig.4 and discussed in the above example.

In view of the various types of automotive sensors discussed above, it will be understood that automotive sensor data in the sense of the present application may be any kind of data, such as an image frame, a data cloud or any other type of data structure suitable to include data from one or more of automotive sensors 410 and to thereby convey information indicative of the driving environment of vehicle 400. Further, automotive sensor data received at a given capture time is referred to in the present disclosure as a set of automotive sensor data. That is, a set of automotive sensor data refers to automotive sensor data captured by one or more automotive sensors 410 at approximately the same time. Since automotive sensors 410 are configured to capture automotive sensor data continuously or at discrete time intervals, the automotive sensor data is provided by automotive sensors 410 as a stream of automotive sensor data.

To illustrate the automotive sensor data, the sets thereof and the stream of automotive sensor data, each set of automotive sensor data is illustrated as a set of automotive sensor data $311_i$ in the form of a cloud in Fig. 3A. The index i denotes the point in time at which the set of automotive sensor data has been captured, with i=0 indicating that the automotive sensor data have been captured at the current point in time and a positive index denoting that the automotive sensor data will be captured in the future. n indicates the total number of sets of automotive sensor data in stream of automotive sensor data 311. The exemplary sets of automotive sensor data $311_0$, $311_i$ and $311_n$ are shown in Fig. 3A as part of stream of automotive sensor data 311 to illustrate the fact that the automotive sensor data is provided continuously or at least at discrete time intervals.

Fig. 3B further shows previous sets of automotive sensor data 331, which are sets of automotive sensor data in the sense discussed above captured by one or more vehicles at some point in time in the past and which may serve as a point of comparison during the second stage of the active learning approach, which will be discussed in more detail below.

In the context of the present disclosure, visual perception task refers to any kind of task identifying one or more object classes within sets of automotive sensor data $311_0$, $311_i$ and $311_n$ captured by the one or more sensors 410. The visual perception task may for example identify within automotive sensor data provided by a camera included in vehicle 400 whether vehicle 400 is located on a controlled-access highway, a limited-access road, an arterial road, a local road or a parking lot. In this case, the one or more object classes correspond to the type of road on which vehicle 400 may be located. Further, the visual perception task may for example identify within automotive sensor data provided by a LIDAR sensor and multiple cameras included in vehicle 400 other vehicles and the type of vehicle, road surface markings and the type of road surface marking, road signs and the type of road sign, vulnerable road users (VRUs) as well as traffic lights and the indication states of the traffic lights. Accordingly, the object classes of the plurality of object classes may correspond to any possible road user, road traffic control device and road surface marking as well as any other type of element encounterable in the driving environment of the vehicle 400 relevant for enabling at least one driving automation system feature. More generally, the visual perception task may thus be any perception task determining objects and the classes thereof in the vicinity of vehicle 400, with the objects referring to both a determination of the general environment of vehicle 400 as well as a determination of individual elements in the vicinity of vehicle 400. In this context, it will accordingly be understood that object classification in the context of the present disclosure may identify the classes of multiple objects within sets of automotive sensor data $311_0$, $311_i$ and $311_n$ and is not limited to the identification of a single object class within sets of automotive sensor data $311_0$, $311_i$ and $311_n$.

The object classifier may be any kind of machine learning algorithm which has been trained based on training automotive sensor data to classify objects in the driving environment of the vehicle, i.e. which has been trained to perform a visual perception task as defined above. Training automotive sensor data may be unlabeled, partially labeled or fully labeled. In other words, the training automotive sensor data may include the corresponding object classes in addition to the automotive sensor data. However, given the active learning functionality discussed in detail below, the training automotive sensor data need not be fully labeled.

The machine learning algorithm may be a feature extractor configured to extract objects from the automotive sensor data and to determine the object class of the extracted objects. To this end, the machine learning algorithm may e.g. be an artificial neural network (ANN), an autoencoder or a data clustering algorithm. For example, if the object classifier is implemented as a neural network configured to perform at least the determination of object classes, a plurality of activation levels of an output layer of the neural network may correspond to a plurality of class probabilities.

It will be understood that a class probability in the context of the present disclosure indicates for a given data point of the automotive sensor data the probability of the given data point being indicative of a corresponding object class. Taking an object classifier configured to identify 100 different object classes as an example, the plurality of class probabilities in this example includes 100 class probabilities with each class probability indicating, for a given data point within the automotive sensor data, the probability of the given data point being indicative of each of the 100 classes. It will be understood that the object classifier may be able to identify any number of classes, such as 10,000 or 10, depending on the type of object classification the object classifier is designed to perform within the context of the visual perception task and the at least one driving automation system feature of vehicle 400. Based on the highest probability out of the plurality of class probabilities, the object classifier may determine the given data point as being indicative of the object class corresponding to the highest class probability.

In Figs. 3A and 3B, the object classifier is illustrated by object classifier 380, which is executed by one or more vehicles 400 as well as a data center processing unit as separate instances. These instances are denoted as vehicle instances 380v and $380_D$. That is, each vehicle instance $380_V$ and data center instance $380_D$ may be instances of the same object classifier, i.e. object classifier 380. In other words, each instance 380v and $380_D$ is expected to provide the same class probability vector as output given the same input of automotive sensor data regardless of which device executes a given instance.

Object classifier 380 may be implemented together with an object instance determinator. To this end, object classifier 380 may be a dual-headed neural network, which may also be considered an autoencoder with two outputs. The dual-headed neural network may include a shared encoder, an instance decoder and an object class decoder. The shared encoder may be configured to generate a shared latent space. The shared latent space may include all activation values of all neurons of the output layer of shared encoder, which corresponds to the bottleneck of the dual-headed neural network. The instance decoder may be configured to determine one or more object instances within the automotive sensor data based on the shared latent space. Object instance in the context of the present disclosure refers to an individual object identified within automotive sensor data, such as a VRU, a vehicle or a traffic light. However, each object instance is merely indicative of the presence and the location of an object within automotive sensor data and not of the object class. Thus, each object instance indicates a position within and the data points of automotive sensor data which form an object. The object class decoder may be configured to determine for one or more data points within automotive sensor data a corresponding object class based on the shared latent space. The object class decoder and the shared encoder may thus be considered object classifier 380 discussed above. Accordingly, the object class decoder may determine the corresponding object class for one or more data points within automotive sensor data based on the highest class probability within the plurality of class probabilities as discussed above.

Alternatively to being implemented together with an object instance determinator, object classifier 380 may also receive the output of an object instance determinator. That is, in some examples of the present disclosure, object classifier 380 may not receive an entire set of automotive sensor data but only the data points of a set of automotive sensor data deemed by an object instance determinator to belong to an object instance in order to determine the class probabilities for the given object instance. Accordingly, stream of automotive sensor data 311 may be pre-processed by an object instance determinator by dividing each set of automotive sensor data into object instances, the data points of which are then provided to object classifier 380 (not illustrated in Fig. 3A).

In the context of the one or more visual perception tasks and object classifier 380 and thus of the present disclosure, active learning refers to selecting unlabeled sets of automotive sensor data, such as sets of automotive sensor data $311_0$, $311_i$ and $311_n$ of stream of automotive sensor data 311, for labeling by an oracle based on parameters of various instances of object classifier 380 and using the returned labeled data for training object classifier 380 and updating the various instances thereof.

Method 100 corresponds to the first stage of the two-stage active learning approach discussed above. Accordingly, method 100 is performed by an automotive control unit, such as automotive control unit 500 of Fig. 5. Method 200 corresponds to the second stage of the two-stage active learning approach. Accordingly, method 200 is performed by a data center processing unit, such as data center processing unit 600 of Fig. 6.

The first stage of the two-stage active learning approach is described with regard to steps 110 to 130 of Fig. 1, step 210 of Fig. 2 and Fig. 3A.

Fig. 3A illustrates the selection of one or more sets of automotive sensor data 320 by one or more vehicles 400 for subsequent processing by data center processing unit 600. The selection by one or more vehicles 400 is illustrated in Fig. 3A by vehicle processing $310_1$ to $310_I$, with the index I corresponding to the number of vehicles 400 which perform the first stage of the two-stage active learning process. It will be understood that any number of vehicles 400 may perform the first stage of the active learning approach and thereby method 100, e.g. only one vehicle 400 up to all vehicles 400 of a vehicle manufacturer implementing the two-stage active learning approach. Consequently and as shown in Fig. 3A, each vehicle processing $310_1$ to $310_I$ selects one or more sets of automotive sensor data $311_0$ to $311_n$ based on stream of automotive sensor data 311 obtained by the corresponding vehicle 400 using the corresponding automotive sensors 410 in accordance with method 100 and provides them to data center processing unit 600 as part of one or more sets of automotive sensor data 320.

In step 110, method 100 performs object classification based on stream of automotive sensor data 311 using vehicle instance 380v of object classifier 380, as discussed above with regard to object classifier 380.

In step 120, method 100 selects one or more sets of automotive sensor data $311_0$ to $311_n$ from stream of automotive sensor data 311 based on a vehicle data selection criterion. The vehicle data selection criterion is indicative of one or more parameters of the object classification performed by each vehicle instance $380_V$ of object classifier 380 based on a corresponding set of the automotive sensor data $311_0$ to $311_n$. This concept is illustrated in Fig. 3A by vehicle data selection 312. Vehicle data selection 312 receives one set of automotive sensor data $311_0$ to $311_n$ and corresponding one or more parameters of the object classification performed by vehicle instance 380v on the received set of automotive sensor data $311_0$ to $311_n$. In Fig. 3A, the parameters are illustrated as activation values $a_{11}$ to $a_{zC}$ of neurons of various layers of vehicle instance $380_V$, with the first digit of the indices of the activation values indicating the respective layer and the second digit indicating the respective number of the neuron within the respective layer. The index of the final activation value of object classifier 380, i.e. index zC, indicates that object classifier 380 includes z layers and is configured to identify C different classes of objects and accordingly provides C output activation values. The entirety of parameters of the object classification performed vehicle instance 380v on the received one set of automotive sensor data is illustrated by activation value matrix A.

It will be understood that object classifier 380 being a neural network and thus the fact that the parameters of the object classification performed on the received set of automotive sensor data correspond to activation values is merely provided as an example. The parameters may be any kind of parameters indicative of the object classification performed on the received set of automotive sensor data which may be suitable for selecting one or more sets of automotive sensor data during the first stage of the two-stage active learning approach based on the actual implementation of object classifier 380 used.

It will further be understood that vehicle data selection 312 is shown as selecting one or ore sets of automotive sensor data based on activation value matrix A in order to illustrate the fact that the selection may be performed based on any number of parameters of vehicle instance 380v, ranging from a single parameter to all parameters. In the example of object classifier 380 being a neural network, vehicle data selection 312 may e.g. select one or more sets of automotive sensor data based on a single activation value of the output layer, the activation values of a single layer or the activation values of some layers of vehicle instance 380v.

The data selection criterion of step 120 and applied by vehicle data selection 312 may be indicative of an uncertainty of the object classification performed by vehicle instance 380v on the corresponding set of automotive sensor data. That is, the one or more parameters of the object classification performed by vehicle instance $380_V$ on the corresponding set of automotive sensor data may be evaluated during step 120 using any approach to evaluate the confidence of vehicle instance $380_V$ in the class probabilities output by vehicle instance $380_V$.

One such evaluation approach may be based on a Dirichlet distribution of an output layer of vehicle instance $380_V$. For example, the uncertainty may be calculated based on the Dirichlet distribution as shown in equation (1):

$$U = \frac{C}{\sum_{k=1}^{C} \alpha_{zk}} \qquad (1)$$

In equation (1), U denotes the uncertainty of the object classification performed by vehicle instance $380_V$ on the corresponding set of automotive sensor data, C denotes the number of classes object classifier 380 is configured to identify and $\alpha_{zk}$ denotes the activation values of the output layer of object classifier 380, which may correspond to the class probabilities.

It will be understood that the uncertainty may also be determined based on an entropy of the plurality of class probabilities or may be determined based on other uncertainty calculations based on Dirichlet distributions, such as entropic uncertainty of the Dirichlet distribution, a logarithmic uncertainty of the Dirichlet distribution.

A further evaluation approach may be a determination of a loss value determined based on one or more layers of vehicle instance $380_V$. More precisely, the one or more layers may be intermediate layers, i.e. any layers of vehicle instance 380v excluding the input and the output layers. Accordingly, the activation values of one or more layers of vehicle instance 380v may respectively be provided as a corresponding layer activation vector to a global average pooling layer. This ensures that the subsequent loss determination is performed based on vectors with the same dimensionality. The corresponding output vectors of the one or more global average pooling layers may then be provided to a fully connected layer, i.e. a layer in which every neuron receives every output value of the preceding global average pooling layer. The output of each fully connected layer is transformed into a scalar value for each of the one or more layers using an activation function, such as the ReLU function or the sigmoid function. If only one layer is used to determine the loss value of the object classification performed by vehicle instance 380v, the output of the single activation function corresponds to the loss value. If more than one layer is used, the output of all activation functions is concatenated and provided to a further fully connected layer. The output of the further fully connected layer is then provided to a final activation function whose output corresponds to the loss value of the object classification performed by vehicle instance 380v.

It will be understood that the additional layers of the loss value determination may be trained based on losses of training sets of automotive sensor data used to train object classifier 380.

Further, it will be understood that the loss value of the object classification performed by vehicle instance $380_V$ on the corresponding set of automotive sensor data may be determined in other ways than the one described above.

A further evaluation approach may be based on a single parameter of the object classification performed by vehicle instance $380_V$ on the corresponding set of automotive sensor data, which may be indicative of vehicle instance 380v indicating a high class probability for an object class rarely present in stream of automotive sensor data 311. That is, if vehicle instance 380v indicates a high probability that a given set of automotive sensor data includes an instance of a rare object class, such a set of automotive sensor data may be selected in step 120 and by vehicle data selection 312 based on the uncertainty inherent in the detection of a rare class.

In either of the evaluation approaches discussed above, a given set of automotive sensor data may be included in the one or more sets of automotive sensor data 320 if the respective score, value or probability exceeds a certain threshold, such as an uncertainty threshold, a loss threshold or a rare class probability threshold.

It will be understood that other evaluation approaches may be used, such as Monte Carlo Dropout analysis, which is based on repeatedly performing object classification with different neurons of vehicle instance $380v$ being turned off during each repetition of the object classification and comparing resulting outputs. However, such evaluation approaches based on repeated performances of the object classification may only be used if they can be completed by vehicle 400 before the next set of automotive sensor data of the stream of automotive sensor data is received from automotive sensors 410.

Fig. 3A illustrates vehicle selection 312 as performing the selection of sets of vehicle data from stream of automotive sensor data as shown in equation (2):

$$eval(\boldsymbol{A}|311_0) \qquad (2)$$

That is, vehicle selection 312 and thereby step 120 of method 100 may evaluate activation value matrix A as determined by vehicle instance 380 based on the input being set of automotive sensor data $311_0$, i.e. the set of automotive sensor data of the stream of automotive sensor data currently received by vehicle 400 and processed by vehicle instance $380v$. In other words, the selection of sets of automotive sensor data for inclusion in sets of automotive sensor data 320 may be based on the instant set of automotive sensor data $311_0$. Accordingly, the vehicle data selection criterion may be indicative of one or more parameters of the object classification performed by vehicle instance $380v$ on the instant set of automotive sensor data $311_0$ of stream of automotive sensor data 311.

By only considering the instant set of automotive sensor data during selection in step 120 and thus during the first stage of the two-stage active learning approach, each vehicle 400 performing method 100 may perform step 110, i.e. the classification of objects within stream of automotive sensor data as part of the one or more visual perception tasks vehicle 400 performs using vehicle instance $380V$, and step 120, i.e. the selection of sets of automotive sensor data based on the vehicle selection criterion, almost simultaneously. Put differently, vehicle 400 may perform classification of objects within currently received set of automotive sensor data $311_0$, evaluate the resulting one or more parameters of vehicle instance $380V$ using the vehicle data selection criterion and either forward instant set of automotive sensor data $311_0$ to data center processing unit 600 for the second stage of the two-stage active learning approach based on the evaluation or not. Vehicle 400 may then proceed to perform steps 110 and 120 for the next set of automotive sensor data $311_i$, which then corresponds to the instant set of automotive sensor data. Vehicle 400 may proceed accordingly as long as vehicle 400 obtains stream of automotive sensor data 311, which may e.g. only end when vehicle 400 is parked and turned-off.

In step 130, method 100 provides the selected one or more sets of automotive sensor data 320 to data center processing unit 600. This step corresponds to step 210 of method 200, in which data center processing unit 600 obtains the one or more sets of automotive sensor data from each vehicle 400 performing method 100.

Next, the second stage of the two-stage active learning approach is described with regard to steps 220 and 240 of Fig. 2 and Fig. 3B. More precisely, Fig. 3 shows data center processing 330, with data center instance $380_D$ of object classifier 380 and data center selection 332 illustrating the second stage of the two-stage active learning approach.

In step 220, method 200 performs object classification based on the one or more sets of automotive sensor data 320 using data center instance $380_D$ of object classifier 380. In other words, step 220 constitutes a repetition by data center processing unit 600 of step 110 performed by one or more vehicles 400 with sets of automotive sensor data 320 as selected by one or more vehicles 400 during the first stage of the two-stage active learning approach.

In step 230, method 200 determines annotation plurality 340. The annotation plurality comprises one or more of the one or more sets of automotive sensor data 320 selected from sets of automotive sensor data 320 based on a data center selection criterion. That is, method 200 in step 230 selects a subset of the sets of automotive sensor data 320 selected by one or more vehicles 400 during the first stage of the two-stage active learning approach, which is then provided to an oracle for annotation.

The data center selection criterion is indicative of one or more parameters of the object classification performed by data center instance $380_D$ based on a corresponding set of automotive sensor data. More precisely, the data center selection criterion may be indicative of a divergence of the object classification performed by data center instance $380_D$ on a corresponding set of automotive sensor data of the one or more sets of automotive sensor data 320 from object classification performed by object classifier 380 on previous sets of automotive sensor data 331. That is, while the selection of sets of automotive data at one or more vehicles 400 may be based only on one or more parameters of the corresponding vehicle instances $380v$ and the corresponding instant sets of automotive sensor data, the selection of the subset of the selection made by one or more vehicle 400 may be based on a comparison with previously performed object classifications. Put differently, the vehicle data selection criterion may be used for an instant decision whether to select an instant set of automotive sensor data for annotation by an oracle while the data center selection criterion may be used to select a given set of automotive sensor data for annotation by an oracle by looking at the object classification performed on the given set of automotive sensor data based on previously performed object classification. This approach enables a fast decision by one or more vehicles 400 on the initial selection, a reduced amount of data traffic between one or more vehicles 400 and data center processing unit 600 and reduced storage requirements for data center processing unit 600 as only a subset of one or more streams of automotive sensor data 311 needs to be stored by data center processing unit 600.

The concept of selecting a subset of sets of automotive sensor data 320 based on divergence from previous object classifications is illustrated in Fig. 3 by data center data selection 332, which receives for each set of automotive sensor data of the sets of automotive sensor data 320 a corresponding output vector. Each output vector includes a corresponding class probability for each of the C object classes object classifier 380 is configured to detect. Further, data center data selection 332 receives previous sets of automotive sensor data 331. Based on this input, data center data selection 332 may evaluate each output vector o and the previous sets of automotive sensor data 331 based on the data center selection criterion, as illustrated by the expression shown on data center data selection 332 in Fig. 3B and as indicated in equation (3):

$$eval(o|331) \qquad (3)$$

Accordingly, data center data selection 332 evaluates each output vector o determined for each set of automotive sensor data within sets of automotive sensor data 320 with regard to previous sets of automotive sensor data 331 based on the data center selection criterion in order to determine any divergence from previously performed object classifications by object classifier 380.

Based on the divergence, a given set of automotive sensor data my be included in annotation plurality 340. For example, any set of automotive sensor data having a divergence exceeding a divergence threshold may be included in annotation plurality 340. In a further example, the sets of automotive sensor data exhibiting the highest divergence, e.g. the top 100 or top 1000 most divergent sets of automotive sensor data, may be included in annotation plurality 340.

The divergence may be for example be based on a distance of the output vectors o to one or more output vectors corresponding to the object classification performed on previous sets of automotive sensor data 331. The distance may be one of a geometric distance or a Euclidean distance.

It will be understood that the divergence may be determined based on any metric indicative of a divergence of the object classification performed by data center instance $380_D$ from previously performed object classifications. The distance between output vectors is merely provided as an example.

The divergence may further take into account the origins of the sets of automotive sensor data by appending a vehicle identifier indicative of the vehicle which provided a given set of automotive sensor data to the corresponding output vector of data center instance $380_D$. The vehicle identifier may e.g. be one hot encoded.

After the second stage of the two-stage active learning approach, which leads to the final selection of sets of automotive sensor data for annotation by the oracle i.e. annotation plurality 340, method 200 proceeds to steps 240 and 250. In step 240 method 200 provides the annotation plurality to oracle 350, as shown in Fig. 3B. Oracle 350 may be a human annotator or an annotation object classifier executed by data center processing unit 600 different from object classifier 380 with e.g. increased certainty and increased object determination capabilities. In step 260, method 200 receives annotated plurality 360 from oracle 350. Annotated plurality 360 corresponds to annotation plurality 340 and includes the annotations by oracle 350, i.e. the object classes indeed present in the corresponding sets of automotive sensor data.

Based on the received annotated plurality, method 200 proceeds in step 260 to train object classifier 380 with annotated plurality 350, as illustrated by object classifier training 370 in Fig. 3B.

Finally, method 200 provides trained object classifier 380 to one or more vehicles 400 for updating corresponding vehicle instances 380v in step 270. In addition, data center instance $380_D$ is likewise updated. Analogously to step 270, method 100 obtains trained object classifier 380 and proceeds to update vehicle instance 380v in step 140. Consequently, following the training of object classifier 380 with the sets of automotive sensor data selected based on the two-stage active learning approach discussed above, all instances of object classifier 380 are updated in order to increase the reliability and security of the object classification performed by one or more vehicle 400 and to thereby increase the reliability and security of the at least one driving automation system feature performed by one or more vehicle 400.

Fig. 5 shows automotive control unit 500 configured to perform method 100. Automotive control unit 500 may include a processor 510, a graphics processing unit (GPU) 520, automotive processing system 530, a memory 540, a removable storage 550, a storage 560, a cellular interface 570, a global navigation satellite system (GNSS) interface 580 and a communication interface 590.

Processor 510 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 510 may perform instructions causing automotive control unit 500 to perform method 100. Processor 510 may be directly coupled to any of the components of automotive control unit 500 or may be directly coupled to memory 530, GPU 520 and device bus 500B.

GPU 520 may be any kind of processing unit optimized for processing graphics related instructions or more generally for parallel processing of instructions. As such, GPU 520 may be configured to generate a display of information, such as information relating to one or more driving automation system features or telemetry data, to a driver of the vehicle, e.g. via a head-up display (HUD) or a display arranged within the view of the driver. GPU 420 may be coupled to the HUD and/or the display via connection 520C. GPU 520 may further perform at least a part of method 100 to enable fast parallel processing of instructions relating to method 100. It should be noted that in some embodiments, processor 510 may determine that GPU 520 need not perform instructions relating to method 100. GPU 520 may be directly coupled to any of the components of automotive control unit 500 or may be directly coupled to processor 510 and memory 530. In some embodiments, GPU 520 may also be coupled to the device bus.

Automotive processing system 530 may be any kind of system-on chip configured to provide trillions of operations per second (TOPS) in order to enable automotive control unit 500 to perform one or more driving automation system features while driving. Automotive processing system 530 may only interface with processor 510 or may interface with other devices via the system bus. Automotive processing system 530 may for example execute instructions relating to object classifier 380 and more precisely relating to vehicles instances 380V.

Memory 540 may be any kind of fast storage enabling processor 510, GPU 520 and automotive processing system 530 to store instructions for fast retrieval during processing of instructions as well as to cache and buffer data. Memory 540 may be a unified memory coupled to processor 510 and GPU 520 and automotive processing system 530 in order to enable allocation of memory 540 to processor 510, GPU 520 and automotive processing system 530 as needed. Alternatively, processor 510, GPU 520 and automotive processing system 530 may be coupled to separate processor memory 540a, GPU memory 540b and automotive processing system memory 540c.

Removable storage 550 may be a storage device which can be removably coupled with automotive control unit 500. Examples include a digital versatile disc (DVD), a compact disc (CD), a Universal Serial Bus (USB) storage device, such as an external SSD, or a magnetic tape. It should be noted that removable storage 550 may store data, such as instructions of method 100 and/or sets of automotive sensor data $311_i$, or may be omitted.

Storage 560 may be a storage device enabling storage of program instructions and other data. For example, storage 560 may be a hard disk drive (HDD), a solid state disk (SSD) or some other type of non-volatile memory. Storage 560 may for example store the instructions of method 100.

Removable Storage 550 and storage 560 may be coupled to processor 510 via system bus 500B. System bus 500B may be any kind of bus system enabling processor 510 and optionally GPU 520 as well as automotive processing system 530 to communicate with the other devices of automotive control unit 500. The system bus may for example be a Peripheral Component Interconnect express (PCIe) bus or a Serial AT Attachment (SATA) bus.

Cellular interface 570 may be any kind of interface enabling automotive control unit 500 to communicate via a cellular network, such as a 4G network or a 5G network.

GNSS interface 580 may be any kind of interface enabling automotive control unit 500 to receive position data provided by a satellite network, such as the Global Positioning System (GPS), the Global Navigation Satellite System (GLONASS) or Galileo.

Communications interface 590 may enable automotive control unit 500 to interface with external devices, either directly or via network, via a connection as illustrated by the line coupling communications interface 590 to the outside of automotive control unit 500. Communications interface 590 may for example enable automotive control unit 500 to couple to a wired or wireless network, such as Ethernet, Wifi, a Controller Area Network (CAN) bus or any bus system appropriate in vehicles. For example, automotive control unit 500 may be coupled to the one or more automotive sensors 410 to receive information about the environment of vehicle 400 in order to classify objects in the vicinity of vehicle 400. Communications interface 590 may also include a USB port or a serial port to enable direct communication with an external device.

Automotive control unit 500 may be integrated with vehicle 400, e.g. beneath the cabin, under the dashboard or in the trunk of vehicle 400.

Fig. 6 shows data center processing unit 600 configured to perform method 200. Data center processing unit 600 may include a processor 610, a graphics processing unit (GPU) 620, a memory 640, a removable storage 650, a storage 660 and a communication interface 690. It will be understood that these elements may substantially correspond to processor 510, GPU 520, memory 540, removable storage 550, storage 560 and communication interface 590 of automotive control unit 500 adapted to the requirements of data center processing. For example, processor 610 may be a server grade multi-core processor configured to provide increased processing power compared with processor 510 located in vehicle 400. Likewise, memory 640 may be bigger in size than and comprise memory architectures different from memory 540 in order to comply with data center memory requirements. GPU 620 may be solely present in data center processing unit 600 to provide fast processing of multiple instructions of method 200 in parallel and may not be used to generate any kind of display, as data center processing unit 600 may only be accessed remotely via communications interface 690 and may thus not need to directly generate any kind of display.

It will be understood that both automotive control unit 500 and data center processing unit 600 may include further or fewer elements than shown in Figs. 5 and 6, as required by the their actual implementations and in particular in view of the processing power requirements of methods 100, 200, object classifier 380 and the one or more driving automation system features.

The invention may further be illustrated by the following examples.

In an example, a method configured to enable active learning for an object classifier configured to perform object classification for one or more visual perception tasks in one or more vehicles, each vehicle being configured to perform at least one driving automation system feature based on the one or more visual perception tasks, the method being performed by a data center processing unit and comprises obtaining one or more sets of automotive sensor data from the one or more vehicles, each set of automotive sensor data having been selected by the corresponding vehicle from a stream of automotive sensor data based on a vehicle data selection criterion, the vehicle data selection criterion being indicative of one or more parameters of object classification performed by a corresponding vehicle instance of the object classifier based on a corresponding set of the automotive sensor data, performing object classification based on the one or more sets of automotive sensor data using a data center instance of the object classifier, determining an annotation plurality, the annotation plurality comprising one or more of the one or more sets of automotive sensor data selected based on a data center selection criterion, the data center selection criterion being indicative of one or more parameters of the object classification performed by the data center instance of the object classifier based on a corresponding set of the automotive sensor data, providing the annotation plurality to an oracle, receiving an annotated plurality from the oracle, the annotated plurality corresponding to the annotation plurality annotated by the oracle, training the object classifier with the annotated plurality, and providing the trained object classifier to the one or more vehicles for updating the corresponding vehicle instances of the object classifier.

In the example method, the vehicle data selection may be criterion indicative of one or more parameters of the object classification performed by the corresponding vehicle instance of the object classifier on an instant set of automotive sensor data of the stream of automotive sensor data.

In the example method, the data selection criterion may be indicative of an uncertainty of the object classification performed by the corresponding vehicle instance on the corresponding set of the automotive sensor data.

In the example method, the uncertainty may be based on a Dirichlet distribution of an output layer of the vehicle instance of the object classifier, or a loss value determined based on one or more layers of the vehicle instance of the object classifier.

In the example method, the data center selection criterion may be indicative of a divergence of the object classification performed by the data center instance of the object classifier on a corresponding set of automotive sensor data of the one or more sets of automotive sensor data from object classification performed on previous sets of automotive sensor data.

In the example method, the divergence may be based on a distance of an output vector of the data center instance of the object classifier corresponding to the object classification performed on the corresponding set of automotive sensor data to one or more output vectors corresponding to the object classification performed on the previous sets of automotive sensor data.

In the example method, the divergence may further be based on a vehicle identifier appended to the output vector, the vehicle identifier being indicative of a vehicle of the one or more vehicles from which the corresponding set of automotive data has been obtained.

In the example method, the distance may be one of a geometric distance or a Euclidean distance.

In the example method, each vehicle instance and the data center instance may be instances of the same object classifier.

In an example, a data center processing unit comprises at least one processing unit and a memory coupled to the at least one processing unit and configured to store machine-readable instructions. The machine-readable instructions cause the at least one processing unit to obtain one or more sets of automotive sensor data from one or more vehicles, each set of automotive sensor data having been selected by the corresponding vehicle from a stream of automotive sensor data based on a vehicle data selection criterion, the vehicle data selection criterion being indicative of one or more parameters of object classification performed by a corresponding vehicle instance of the object classifier based on a corresponding set of the automotive sensor data, perform object classification based on the one or more sets of automotive sensor data using a data center instance of the object classifier, determine an annotation plurality, the annotation plurality comprising one or more of the one or more sets of automotive sensor data selected based on a data center selection criterion, the data center selection criterion being indicative of one or more parameters of the object classification performed by the data center instance of the object classifier based on a corresponding set of the automotive sensor data, provide the annotation plurality to an oracle, receive an annotated plurality from the oracle, the annotated plurality corresponding to the annotation plurality annotated by the oracle, train the object classifier with the annotated plurality, and providing the trained object classifier to the one or more vehicles for updating the corresponding vehicle instances of the object classifier.

In the example data processing unit, the machine-readable instructions may further cause the at least one processing unit to perform one of the above example methods.

In an example, a method is configured to enable active learning for an object classifier configured to perform object classification for one or more visual perception tasks in one or more vehicles, each vehicle being configured to perform at least one driving automation system feature based on the one or more visual perception tasks, the method being performed by one of the one or more vehicles and comprising: performing object classification based on a stream of automotive sensor data using a vehicle instance of the object classifier, selecting one or more sets of automotive sensor data from the stream of automotive sensor data based on a vehicle data selection criterion, the vehicle data selection criterion being indicative of one or more parameters of the object classification performed by the vehicle instance of the object classifier based on a corresponding set of the automotive sensor data, providing the selected one or more sets of automotive sensor data to a data center processing unit, and obtaining a trained object classifier for updating the vehicle instance of the object classifier, wherein: the object classifier has been trained with an annotated plurality, wherein the annotated plurality corresponds to an annotation plurality annotated by an oracle, and the annotation plurality comprises one or more of the one or more sets of automotive sensor data selected from the one or more sets of automotive sensor data provided to the data center processing unit by at least the vehicle based on a data center selection criterion, the data center selection criterion being indicative of one or more parameters of object classification performed by a data center instance of the object classifier based on a corresponding set of the automotive sensor data.

In an example, an automotive control unit comprises at least one processing unit and a memory coupled to the at least one processing unit and configured to store machine-readable instructions. The machine-readable instructions cause the at least one processing unit to: perform object classification based on a stream of automotive sensor data using a vehicle instance of the object classifier, select one or more sets of automotive sensor data from the stream of automotive sensor data based on a vehicle data selection criterion, the vehicle data selection criterion being indicative of one or more parameters of the object classification performed by the vehicle instance of the object classifier based on a corresponding set of the automotive sensor data, provide the selected one or more sets of automotive sensor data to a data center processing unit, and obtain a trained object classifier for updating the vehicle instance of the object classifier, wherein: the object classifier has been trained with an annotated plurality, wherein the annotated plurality corresponds to an annotation plurality annotated by an oracle, and the annotation plurality comprises one or more of the one or more sets of automotive sensor data selected from the one or more sets of automotive sensor data provided to the data center processing unit by at least the vehicle based on a data center selection criterion, the data center selection criterion being indicative of one or more parameters of object classification performed by a data center instance of the object classifier based on a corresponding set of the automotive sensor data.

The preceding description has been provided to illustrate two-stage active learning for object classification in automotive visual perception tasks. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

**List of Reference Signs**

| | |
|---|---|
| 100 to 140 | method and method steps |
| 200-270 | method and method steps |
| 310 | vehicle processing |
| 311 | stream of automotive sensor data |
| $311_0$ | instant set of automotive sensor data |
| 312 | vehicle data selection |
| 320 | automotive sensor data set(s) |
| 330 | data center processing |
| 331 | previous sets of automotive sensor data |
| 332 | data center data selection |
| 340 | annotation plurality of automotive sensor data |
| 350 | oracle |
| 360 | annotated plurality of automotive sensor data |
| 370 | object classifier training |
| 380 | object classifier |
| $380_V$ | vehicle instance of object classifier 280 |
| $380_D$ | data center instance of object classifier 280 |
| 400 | vehicle |
| 410 | automotive sensor |
| 500 | automotive control unit |
| 500B | bus |
| 510 | CPU |
| 520 | GPU |
| 520c | connection |
| 530 | automotive processing system |
| 540 | memory |
| 550 | removable storage |
| 560 | storage |
| 570 | cellular interface |
| 580 | GNSS interface |

| 590 | communications interface |
|---|---|
| 600 | data center processing unit |
| 600B | bus |
| 610 | CPU |
| 620 | GPU |
| 620c | connection |
| 640 | memory |
| 650 | removable storage |
| 660 | storage |
| 690 | communications interface |

**Claims**

1. Method configured to enable active learning for an object classifier configured to perform object classification for one or more visual perception tasks in one or more vehicles, each vehicle being configured to perform at least one driving automation system feature based on the one or more visual perception tasks, the method being performed by a data center processing unit and comprising:

   obtaining one or more sets of automotive sensor data from the one or more vehicles, each set of automotive sensor data having been selected by the corresponding vehicle from a stream of automotive sensor data based on a vehicle data selection criterion, the vehicle data selection criterion being indicative of one or more parameters of object classification performed by a corresponding vehicle instance of the object classifier based on a corresponding set of the automotive sensor data;
   performing object classification based on the one or more sets of automotive sensor data using a data center instance of the object classifier;
   determining an annotation plurality, the annotation plurality comprising one or more of the one or more sets of automotive sensor data selected based on a data center selection criterion, the data center selection criterion being indicative of one or more parameters of the object classification performed by the data center instance of the object classifier based on a corresponding set of the automotive sensor data;
   providing the annotation plurality to an oracle;
   receiving an annotated plurality from the oracle, the annotated plurality corresponding to the annotation plurality annotated by the oracle;
   training the object classifier with the annotated plurality; and
   providing the trained object classifier to the one or more vehicles for updating the corresponding vehicle instances of the object classifier.

2. The method of claim 1, wherein the vehicle data selection criterion is indicative of one or more parameters of the object classification performed by the corresponding vehicle instance of the object classifier on an instant set of automotive sensor data of the stream of automotive sensor data.

3. The method of any one of the preceding claims, wherein the data selection criterion is indicative of an uncertainty of the object classification performed by the corresponding vehicle instance on the corresponding set of the automotive sensor data.

4. The method of claim 3, wherein the uncertainty is based on:

   a Dirichlet distribution of an output layer of the vehicle instance of the object classifier, or
   a loss value determined based on one or more layers of the vehicle instance of the object classifier.

5. The method of any one of the preceding claims, wherein the data center selection criterion is indicative of a divergence of the object classification performed by the data center instance of the object classifier on a corresponding set of automotive sensor data of the one or more sets of automotive sensor data from object classification performed on previous sets of automotive sensor data.

6. The method of claim 5, wherein the divergence is based on a distance of an output vector of the data center instance of the object classifier corresponding to the object classification performed on the corresponding set of automotive sensor data to one or more output vectors corresponding to the object classification performed on the previous sets of automotive sensor data.

7. The method of claim 6, wherein the divergence is further based on a vehicle identifier appended to the output vector, the vehicle identifier being indicative of a vehicle of the one or more vehicles from which the corresponding set of automotive data has been obtained.

8. The method of any one of claim 6 and 7, wherein the distance is one of a geometric distance or a Euclidean distance.

9. The method of any one of the preceding claims, wherein each vehicle instance and the data center instance are instances of the same object classifier.

10. A data center processing unit, comprising:

    at least one processing unit; and
    a memory coupled to the at least one processing unit and configured to store machine-readable instructions, wherein the machine-readable instructions cause the at least one processing unit to:

obtain one or more sets of automotive sensor data from one or more vehicles, each set of automotive sensor data having been selected by the corresponding vehicle from a stream of automotive sensor data based on a vehicle data selection criterion, the vehicle data selection criterion being indicative of one or more parameters of object classification performed by a corresponding vehicle instance of the object classifier based on a corresponding set of the automotive sensor data;

perform object classification based on the one or more sets of automotive sensor data using a data center instance of the object classifier;

determine an annotation plurality, the annotation plurality comprising one or more of the one or more sets of automotive sensor data selected based on a data center selection criterion, the data center selection criterion being indicative of one or more parameters of the object classification performed by the data center instance of the object classifier based on a corresponding set of the automotive sensor data;

provide the annotation plurality to an oracle;

receive an annotated plurality from the oracle, the annotated plurality corresponding to the annotation plurality annotated by the oracle;

train the object classifier with the annotated plurality; and

providing the trained object classifier to the one or more vehicles for updating the corresponding vehicle instances of the object classifier.

11. The data processing unit of claim 10, wherein the machine-readable instructions further cause the at least one processing unit to perform the method of any one of claims 2 to 9.

12. Method configured to enable active learning for an object classifier configured to perform object classification for one or more visual perception tasks in one or more vehicles, each vehicle being configured to perform at least one driving automation system feature based on the one or more visual perception tasks, the method being performed by one of the one or more vehicles and comprising:

performing object classification based on a stream of automotive sensor data using a vehicle instance of the object classifier;

selecting one or more sets of automotive sensor data from the stream of automotive sensor data based on a vehicle data selection criterion, the vehicle data selection criterion being indicative of one or more parameters of the object classification performed by the vehicle instance of the object classifier based on a corresponding set of the automotive sensor data;

providing the selected one or more sets of automotive sensor data to a data center processing unit; and

obtaining a trained object classifier for updating the vehicle instance of the object classifier, wherein:

the object classifier has been trained with an annotated plurality, wherein the annotated plurality corresponds to an annotation plurality annotated by an oracle, and

the annotation plurality comprises one or more of the one or more sets of automotive sensor data selected from the one or more sets of automotive sensor data provided to the data center processing unit by at least the vehicle based on a data center selection criterion, the data center selection criterion being indicative of one or more parameters of object classification performed by a data center instance of the object classifier based on a corresponding set of the automotive sensor data.

13. An automotive control unit, comprising:

at least one processing unit; and
a memory coupled to the at least one processing unit and configured to store machine-readable instructions, wherein the machine-readable instructions cause the at least one processing unit to:

perform object classification based on a stream of automotive sensor data using a vehicle instance of the object classifier;

select one or more sets of automotive sensor data from the stream of automotive sensor data based on a vehicle data selection criterion, the vehicle data selection criterion being indicative of one or more parameters of the object classification performed by the vehicle instance of the object classifier based on a corresponding set of the automotive sensor data;

provide the selected one or more sets of automotive sensor data to a data center processing unit; and

obtain a trained object classifier for updating the vehicle instance of the object classifier, wherein:

the object classifier has been trained with an annotated plurality, wherein the annotated plurality corresponds to an annotation plurality annotated by an oracle, and

the annotation plurality comprises one or more of the one or more sets of automotive sensor data selected from the one or more sets of automotive sensor data provided to the data center processing unit by at least the vehicle based on a data center selection criterion, the data center selection criterion being indicative of one or more parameters of object classification performed by a data center instance of the object classifier based on a corresponding set of the automotive sensor data.

14. A vehicle comprising the automotive control unit of claim 13.

100

| 110 | performing object classification based on a stream of automotive sensor data using the vehicle instance of the object classifier |
| 120 | selecting one or more sets of automotive sensor data from the stream of automotive sensor data based on the vehicle data selection criterion |
| 130 | providing the selected one or more sets of automotive sensor data to the data center |
| 140 | obtaining a trained object classifier for updating the vehicle instance of the object classifier |

Fig. 1

200

| 210 | obtaining one or more sets of automotive sensor data from one or more vehicles |
| 220 | performing object classification based on the one or more sets of automotive sensor data using a data center instance of an object classifier |
| 230 | determining an annotation plurality |
| 240 | providing the annotation plurality to an oracle |
| 250 | receiving an annotated plurality from the oracle |
| 260 | training the object classifier with the annotated plurality |
| 270 | providing the trained object classifier to the one or more vehicles for updating the corresponding vehicle instances of the object classifier |

Fig. 2

Fig. 3A

Fig. 3B

Fig. 4

Fig. 5

600

640

640a

- - - - - -

640b

620c

600B

650

620

660

610

690

Fig. 6

## EUROPEAN SEARCH REPORT

**Application Number**

EP 24 19 0955

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kargar Isaac: "Active Learning, Data Selection, Data Auto-Labeling, and Simulation in Autonomous Driving", , 17 January 2022 (2022-01-17), pages 1-84, XP093050456, Retrieved from the Internet: URL:https://medium.com/search?q=active-learning-data-selection-data-auto-labeling-and-simulation-in-autonomous-driving [retrieved on 2023-05-30] * pp. 16-20, pp. 21-25, pp. 34-44, pp.51-69 * | 1-14 | INV. G06F18/25 G06V10/764 G06V10/774 G06V10/82 G06V20/56 |
| X | Andrej Karpathy: "Andrej Karpathy - AI for Full-Self Driving at Tesla", , 20 April 2020 (2020-04-20), XP093234602, Retrieved from the Internet: URL:https://www.youtube.com/watch?v=hx7BXih7zx8 [retrieved on 2024-12-17] * video starting at 10:35 and ending at 23:00 * | 1-14 | |
| X | US 2019/303759 A1 (FARABET CLEMENT [US] ET AL) 3 October 2019 (2019-10-03) * paragraphs [0042] - [0050] * | 1-14 | TECHNICAL FIELDS SEARCHED (IPC) G06F G06V |
| X | US 2022/051017 A1 (CHOI JIWOONG [US] ET AL) 17 February 2022 (2022-02-17) * paragraphs [0125], [0127], [0240] - [0246] * | 1-14 | |

-/--

The present search report has been drawn up for all claims

| Place of search | Date of completion of the search | Examiner |
|---|---|---|
| The Hague | 21 December 2024 | Androulidakis, Iosif |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 19 0955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GHITA AHMED ET AL: "ActiveAnno3D - An Active Learning Framework for Multi-Modal 3D Object Detection", 2024 IEEE INTELLIGENT VEHICLES SYMPOSIUM (IV), IEEE, 2 June 2024 (2024-06-02), pages 1699-1706, XP034641341, DOI: 10.1109/IV55156.2024.10588452 [retrieved on 2024-07-15] * Section I, Section III * | 1-14 | |
| A | JULIAN W\"ORMANN ET AL: "Knowledge Augmented Machine Learning with Applications in Autonomous Driving: A Survey", ARXIV.ORG, CORNELL UNIVERSITY LIBRARY, 201 OLIN LIBRARY CORNELL UNIVERSITY ITHACA, NY 14853, 13 January 2023 (2023-01-13), XP091416895, * Section 5.4 * | 1-14 | |
| A | YU HUANG ET AL: "An Overview about Emerging Technologies of Autonomous Driving", ARXIV.ORG, CORNELL UNIVERSITY LIBRARY, 201 OLIN LIBRARY CORNELL UNIVERSITY ITHACA, NY 14853, 23 June 2023 (2023-06-23), XP091545797, * Section 12 * | 1-14 | TECHNICAL FIELDS SEARCHED (IPC) |

The present search report has been drawn up for all claims

| Place of search | Date of completion of the search | Examiner |
|---|---|---|
| The Hague | 21 December 2024 | Androulidakis, Iosif |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.............................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 19 0955

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2024

| Patent document cited in search report | Publication date | Patent family member(s) | Publication date |
|---|---|---|---|
| US 2019303759 A1 | 03-10-2019 | CN 111919225 A | 10-11-2020 |
| | | DE 112019001605 T5 | 17-12-2020 |
| | | US 2019303759 A1 | 03-10-2019 |
| | | US 2023004801 A1 | 05-01-2023 |
| | | WO 2019191306 A1 | 03-10-2019 |
| US 2022051017 A1 | 17-02-2022 | CN 115039140 A | 09-09-2022 |
| | | DE 112021001461 T5 | 29-12-2022 |
| | | GB 2602576 A | 06-07-2022 |
| | | US 2022051017 A1 | 17-02-2022 |
| | | WO 2022035787 A1 | 17-02-2022 |

EPO FORM P0459

For more details about this annex : see Official Journal of the European Patent Office, No. 12/82